# EUROPÄISCHE PATENTSCHRIFT

(11) **EP 3 415 356 B1**
(45) Veröffentlichungstag und Bekanntmachung des Hinweises auf die Patenterteilung: **01.12.2021**
(21) Anmeldenummer: 18174465.7
(22) Anmeldetag: 28.05.2018
(51) Int. Cl.: B60K 17/04, B60K 1/00

(54) **ACHSGETRIEBEMODUL**
AXLE TRANSMISSION MODULE
MODULE D'ENGRENAGE D'ESSIEU

(30) Priorität: 14.06.2017 DE 102017113082
(43) Veröffentlichungstag der Anmeldung: 19.12.2018
(73) Patentinhaber: MAN Truck & Bus SE, 80995 München (DE)
(72) Erfinder: Braykoff, Christo, 80997 München (DE)
(74) Vertreter: v. Bezold & Partner Patentanwälte - PartG mbB

(56) Entgegenhaltungen:
- WO-A1-2016/149836
- DE-A1-102015 015 006
- DE-T2- 69 613 021
- DE-U1-202016 102 237
- US-B1- 9 566 857

## Beschreibung

Die Erfindung betrifft eine Verwendung eines Achsgetriebemodulsystems.

Der Antriebsstrang eines Kraftfahrzeugs kann ein Achsgetriebe aufweisen. Das Achsgetriebe lenkt bei längsliegender Antriebseinheit ein Antriebsmoment um 90° auf die Radwellen um. Bei einer querliegenden Antriebseinheit muss das Antriebsmoment nicht umgelenkt werden und die Drehmomentübertragung kann mittels Stirnrädern realisiert werden. Ein Achsgetriebe mit Kegelradstufe für ein Nutzfahrzeug ist beispielsweise in der DE 100 43 622 A1 offenbart.

Bei der Umstellung von Antriebssträngen mit herkömmlichem Verbrennungsmotor auf Antriebsstränge mit (zentralem) Elektroantrieb kann es notwendig sein, im Antriebsstrang ein zusätzliches Anpassgetriebe (Reduziergetriebe) vorzusehen. Das Anpassgetriebe untersetzt die Drehzahl des Elektroantriebs.

Das Vorsehen eines separaten Anpassgetriebes kann jedoch nachteilig sein, da zusätzlicher Bauraum benötigt wird. Außerdem können die zusätzlichen Kosten für das Anpassgetriebe und allgemein die hohen Stückkosten für Antriebsstränge bei Elektrofahrzeugen aufgrund der bisher niedrigen Stückzahlen nachteilig sein.

Aus der DE 10 2010 061 217 A1 ist ein elektrisches Achsmodul bekannt, bei dem ein Rotor einer Elektromaschine drehfest mit einer Kegelritzelwelle einer Kegelradstufe verbunden ist. Zusätzlich ist ein Verbrennungsmotor über ein Planetengetriebe mit der Kegelritzelwelle verbunden.

Die US 9 566 857 B1 offenbart eine elektrische Antriebseinheit für ein Antriebsstrangsystem mit einem ersten und zweiten Antriebsstrang und einem Primärantriebssystem zum Übertragen des Drehmoments auf den ersten Antriebsstrang. Die elektrische Antriebseinheit ist fest an einer Antriebsachse verbaut. Ein Motor erzeugt ein Drehmoment und ein Ritzel ist in selektiver Verbindung damit angeordnet. Zwischen dem Ritzel und dem zweiten Antriebsstrang ist ein Differential zum Teilen des Drehmoments dazwischen angeordnet. Ein erstes Planetengetriebe ist zwischen Motor und Ritzel angeordnet, und ein zweite Planetengetriebe ist zwischen dem ersten Planetengetriebe und dem Ritzel angeordnet. Eine Klauenkupplung, die zwischen dem Ritzel und den Planetengetrieben angeordnet ist, ist zwischen einer ersten Position, in der das Drehmoment des Motors durch das erste Planetengetriebe und die Klauenkupplung übertragen wird, um den zweiten Antriebsstrang bei einem ersten Übersetzungsverhältnis anzutreiben, und einer zweiten Position, in der das Drehmoment des Motors durch beide Planetengetriebe und die Klauenkupplung übertragen wird, um den zweiten Antriebsstrang bei einem zweiten Übersetzungsverhältnis anzutreiben, beweglich.

Die DE 10 2015 015006 A1 betrifft eine Antriebsstrangvorrichtung für ein Kraftfahrzeug, mit einer Differentialeingangswelle, die zu einer Anbindung einer fronteingebauten Brennkraftmaschine an ein Heckdifferential vorgesehen ist, und mit zwei Differentialausgangswellen zur Anbindung des Heckdifferentials an unterschiedliche Hinterräder des Kraftfahrzeugs. Die Antriebsstrangvorrichtung weist eine weitere Differentialeingangswelle zur Anbindung des Heckdifferentials an einen Elektromotor auf. Der Elektromotor ist fest mit der Hinterachse verbunden.

Die WO 2016/149836 A1 offenbart einen Kraftstoff-zu-Elektro-Umbausatz. Der Umbausatz ist für Rahmenfahrzeuge geeignet, bietet einen Rahmen zur Montage auf dem Fahrgestell mit Befestigungsvorrichtungen an einem Kopfteil und an einem Mittelteil des Rahmens, der einen Elektromotor, ein Getriebe und mindestens ein Batteriesystem trägt. Der Austausch von konventionellem Motor und Getriebe durch die am Rahmen montierte Einheit kann schnell erfolgen. Der Rahmen kann am Mittelteil mit Scherschrauben befestigt werden, um ein Zusammenknicken des Chassis bei einem Frontalaufprall nicht zu behindern.

Der Erfindung liegt die Aufgabe zu Grunde, eine kostengünstige und/oder platzsparende Integration eines Anpassgetriebes insbesondere bei einem Elektro-Kraftfahrzeug vorzusehen.

Die Aufgabe wird gelöst durch eine Verwendung eines Achsgetriebemodulsystems gemäß dem unabhängigen Anspruch. Vorteilhafte Weiterbildungen sind in den abhängigen Ansprüchen und der Beschreibung angegeben.

Das Achsgetriebemodul ist insbesondere ein Hinterachsgetriebemodul. Das Achsgetriebemodul ist für ein vorzugsweise elektrisch angetriebenes Kraftfahrzeug, bevorzugt Nutzfahrzeug (zum Beispiel Lastkraftwagen oder Omnibus) vorgesehen. Das Achsgetriebemodul weist eine erste Radwelle und eine zweite Radwelle, die antreibend mit Rädern des Kraftfahrzeugs verbindbar sind, auf. Das Achsgetriebemodul weist ein Querdifferential, das antreibend mit der ersten Radwelle und der zweiten Radwelle verbunden ist, auf. Das Achsgetriebemodul weist eine Kegelradstufe, die antreibend mit dem Querdifferential verbunden ist, auf. Das Achsgetriebemodul weist eine Zwischenwelle, die antreibend mit der Kegelradstufe verbunden ist, auf. Das Achsgetriebemodul weist ein Anpassgetriebe, insbesondere Planetengetriebe, mit einer Übersetzung ungleich 1, vorzugsweise größer als 1, das antreibend mit der Zwischenwelle verbunden und koaxial zu der Zwischenwelle vorgesehen ist, auf. Zum Antreiben der Räder ist die Zwischenwelle nur (einzig) über das Anpassgetriebe antreibbar.

Insbesondere kann das Anpassgetriebe ein Plusgetriebe oder ein Minusgetriebe sein.

Damit kann ein Anpassgetriebe zum Erzielen einer Übersetzung, die die Kegelradstufe allein nicht bereitstellen kann, direkt im Achsgetriebemodul vorzugsweise als Planetengetriebe mit Übersetzung größer als 1 integriert werden. Die Kegelradstufe allein kann üblicherweise aufgrund physikalischer Begrenzungen lediglich eine Maximalübersetzung von rund 5,5 ohne wesentliche Reduzierung der Lebensdauer realisieren. Die benötigte Übersetzung kann jedoch deutlich höher sein, zum Beispiel zwischen 6 und 25. Eine solche Übersetzung kann dadurch erreicht werden, dass das im Achsgetriebemodul integrierte Anpassgetriebe zusätzlich eine Übersetzung größer als 1 erbringt. Die Integration des Anpassgetriebes direkt in das Achsgetriebemodul spart einerseits Bauraum, da das Anpassgetriebe nicht separat zwischen der Antriebseinheit und dem Achsgetriebe integriert werden muss. Andererseits eröffnet dies die Möglichkeit für ein Modulbausystem für Achsgetriebemodule, die entweder mit einem Anpassgetriebe für Fahrzeuge mit zentralem Elektroantrieb oder ohne Anpassgetriebe für Fahrzeuge mit zentralem Verbrennungsmotor ausgestattet werden können. Mittels des Modulbausystems können Produktionskosten erheblich gesenkt werden.

Hervorzuheben ist hierbei insbesondere, dass das Querdifferential, die Radwellen, die Kegelradstufe, die Zwischenwelle und das Anpassgetriebe tatsächlich in einem gemeinsamen Modul, nämlich dem Achsgetriebemodul, integriert sind. Damit ist das Anpassgetriebe insbesondere nicht direkt an einen (beispielsweise zentralen) Elektroantrieb angeflanscht und/oder bspw. nicht rahmenfest zwischen einem Elektroantrieb und dem Achsgetriebemodul zwischengeschaltet.

Insbesondere kann die Kegelradstufe geradverzahnte, schrägverzahnte oder bogenverzahnte (Spiral- oder Hypoid-) Kegelräder aufweisen.

Wie hierin verwendet, bedeutet der Ausdruck "ungleich 1" oder "größer als 1", dass eine wesentliche Abweichung zu einer Übersetzung von 1 vorliegt (bspw. im Bereich der ersten Nachkommastelle). D. h., eine aufgrund von Fehlertoleranzen usw. erzeugte Übersetzung von bspw. 1,001 genügt der Anforderung ungleich 1/größer als 1 nicht.

Bezüglich des Ausdrucks "größer als 1" ist ferner zu beachten, dass hiermit auch Übersetzungen eines Minusgetriebes umfasst sind, das zusätzlich zu einer Übersetzung größer als 1 noch eine Drehrichtungsumkehrung bewirkt. Auf diese Drehrichtungsumkehrung kann bspw. durch Voranstellen eines Minuszeichen ("-") vor einer Übersetzung i des Minusgetriebes hingewiesen werden.

Die Wendung "zum Antreiben der Räder ist die Zwischenwelle nur über das Anpassgetriebe antreibbar" bedeutet, dass ein Antriebsmoment zum Antreiben der Räder immer über das Anpassgetriebe zur Zwischenwelle geleitet wird: Mit anderen Worten gesagt, in jedem Betriebszustand, in dem die Räder über die Zwischenwelle angetrieben werden, wird das Antriebsmoment über das Anpassgetriebe zu der Zwischenwelle geleitet.

Es ist auch möglich, dass das Achsgetriebemodul eine Eingangswelle aufweist, die mit einer Kardanwelle, die vorzugsweise von einer Antriebseinheit, zum Beispiel einem Elektroantrieb, angetrieben wird, verbindbar ist.

Es ist ferner möglich, dass das Achsgetriebemodul einen Flansch aufweist, der antreibend mit einer Eingangswelle des Achsgetriebemoduls und/oder dem Anpassgetriebe verbunden ist.

Vorzugsweise kann die Kegelradstufe ein Kegelritzel und ein Tellerrad, die miteinander kämmen, aufweisen. Insbesondere kann das Kegelritzel auf der Zwischenwelle angeordnet sein und mit der Zwischenwelle drehfest verbunden oder verbindbar sein.

Die Kegelradstufe kann auch eine Kraftumlenkung um ungefähr 90° auf die Radwellen bewirken.

Bevorzugt kann das Achsgetriebemodul als Nutzfahrzeugachsgetriebemodul, insbesondere Nutzfahrzeughinterachsgetriebemodul, ausgebildet sein.

Insbesondere ist das Achsgetriebemodul zur Verbindung mit einer zentralen und/oder in Fahrzeuglängsrichtung ausgerichteten Antriebseinheit vorzugsweise einem Elektroantrieb ausgebildet.

Vorzugsweise kann das Anpassgetriebe weder rahmenfest am Kraftfahrzeug vorgesehen oder vorsehbar noch direkt am Elektromotor angeflanscht oder anflanschbar sein.

In einer besonders bevorzugten Ausführungsform ist ein Sonnenrad des Planetengetriebes gehäusefest (zum Beispiel an einem Anpassgetriebegehäuse) festgelegt. Alternativ oder ergänzend ist eine Eingangswelle des Achsgetriebemoduls direkt antreibend mit einem Hohlrad des Planetengetriebes verbunden. Alternativ oder zusätzlich ist ein Planetenträger des Planetengetriebes direkt antreibend mit der Zwischenwelle verbunden.

In einer Ausführungsform ist ein Planetenträger des Planetengetriebes gehäusefest (zum Beispiel an einem Anpassgetriebegehäuse) festgelegt. Alternativ oder zusätzlich ist eine Eingangswelle des Achsgetriebemoduls direkt antreibend mit einem Sonnenrad des Planetengetriebes verbunden. Alternativ oder zusätzlich ist ein Hohlrad des Planetengetriebes direkt antreibend mit der Zwischenwelle verbunden.

In einer weiteren Ausführungsform ist ein Hohlrad des Planetengetriebes gehäusefest (zum Beispiel an einem Anpassgetriebegehäuse) festgelegt. Alternativ oder ergänzend ist eine Eingangswelle des Achsgetriebemoduls direkt antreibend mit einem Sonnenrad des Planetengetriebes verbunden. Alternativ oder zusätzlich ist ein Planetenträger des Planetengetriebes direkt antreibend mit der Zwischenwelle verbunden.

In einer Ausführungsvariante weist ein Achsgetriebemodul ferner ein Achsgetriebegehäuse, in dem die erste Radwelle, die zweite Radwelle, das Querdifferential, die Kegelradstufe und teilweise die Zwischenwelle aufgenommen sind, auf. Zusätzlich weist das Achsgetriebemodul ein Anpassgetriebegehäuse, in dem das Anpassgetriebe und teilweise die Zwischenwelle aufgenommen ist und das an das Achsgetriebegehäuse montiert ist, auf. Dadurch ergibt sich eine Modularisierung dahingehend, dass das Anpassgetriebe optional vorgesehen werden kann, wenn das Anpassgetriebegehäuse an das Achsgetriebegehäuse montiert wird.

In einer weiteren Ausführungsvariante sind die erste Radwelle, die zweite Radwelle, das Querdifferential, die Kegelradstufe, die Zwischenwelle und das Anpassgetriebe in einer Achsbrücke integriert und/oder (ineinander) verbaut. Alternativ oder zusätzlich sind das Achsgetriebegehäuse und das Anpassgetriebegehäuse in einer Achsbrücke integriert.

In einer bevorzugten Ausführungsvariante weisen das Anpassgetriebe und die Kegelradstufe eine gemeinsame Übersetzung in einem Bereich zwischen 6 und 15, insbesondere zwischen 6 und 12, vorzugsweise zwischen 7 und 8, auf. Damit kann insbesondere die bei Nutzfahrzeugen erforderliche Übersetzung bei Verwendung eines Elektroantriebs erreicht werden.

In einer bevorzugten Ausführungsform ist das Anpassgetriebe direkt antreibend mit der Zwischenwelle verbunden und/oder die Zwischenwelle direkt antreibend mit der Kegelradstufe verbunden. Alternativ oder zusätzlich ist die Kegelradstufe direkt antreibend mit dem Querdifferential verbunden und/oder das Querdifferential direkt antreibend mit der ersten Radwelle und der zweiten Radwelle verbunden.

In einer besonders bevorzugten Ausführungsform ist die Zwischenwelle integral mit einem Kegelritzel der Kegelradstufe ausgebildet (zum Beispiel als Kegelritzelwelle).

Die Erfindung hat den Vorteil, dass durch Verwendung vieler Gleichteile die Produktionskosten für das erste und zweite Achsgetriebemodul erheblich gesenkt werden können. Damit können auch Achsgetriebemodule in kleinen Stückzahlen kosteneffizient produziert werden. Dies kann insbesondere beim Übergang von Fahrzeugen mit Verbrennungsmotor mit entsprechendem Achsgetriebe zu Fahrzeugen mit Elektromotor(en) und entsprechend angepasstem Achsgetriebe von Bedeutung sein.

Vorzugsweise weist nur das erste Achsgetriebemodul eine Eingangswelle auf, die antreibend mit dem Anpassgetriebe verbunden ist.

In einem Ausführungsbeispiel ist das Achsgetriebegehäuse des ersten Achsgetriebemoduls und des zweiten Achsgetriebemoduls gleich ausgebildet (als ein Gleichteil ausgebildet).

In einem weiteren Ausführungsbeispiel weist nur das erste Achsgetriebemodul das Anpassgetriebegehäuse auf. Alternativ oder zusätzlich weist nur das zweite Achsgetriebemodul eine Abdeckung, insbesondere einen Ritzeltopf, die im Wesentlichen eine aus dem Achsgetriebegehäuse vorstehenden Bereich der Zwischenwelle umgibt, auf. Die Abdeckung unterscheidet sich von dem Anpassgetriebegehäuse. Die Abdeckung nimmt insbesondere kein Getriebe auf.

In einem bevorzugten Ausführungsbeispiel weist das Achsgetriebegehäuse einen Montagebereich auf, an dem wahlweise das Anpassgetriebegehäuse des ersten Achsgetriebemoduls oder eine Abdeckung (zum Beispiel einen Ritzeltopf) des zweiten Achsgetriebemoduls montierbar ist. Alternativ oder zusätzlich sind ein Montagebereich des Anpassgetriebegehäuses und ein Montagebereich der Abdeckung gleich ausgebildet (zum Bsp. mit gleicher Montagepassung, gleichem Zentrierdurchmesser, gleichem Lochkreisdurchmesser und/oder gleichem Schraubenbohrungsdurchmesser).

In einer weiteren Ausführungsvariante ist mindestens ein Lager der ersten Radwelle, der zweiten Radwelle, des Querdifferentials und/oder der Zwischenwelle des ersten Achsgetriebemoduls und des zweiten Achsgetriebemoduls gleich ausgebildet (Gleichteile). Alternativ oder zusätzlich ist mindestens eine Dichtung, insbesondere des Achsgetriebegehäuses, des ersten Achsgetriebemoduls und des zweiten Achsgetriebemoduls gleich ausgebildet (Gleichteil). Alternativ oder ergänzend ist ein Flansch des ersten Achsgetriebemoduls und des zweiten Achsgetriebemoduls zum Antreiben des Achsgetriebemoduls gleich ausgebildet (Gleichteil).

Insbesondere kann der Flansch des ersten Achsgetriebemoduls antreibend (zum Beispiel über eine Eingangswelle) mit dem Anpassgetriebe verbunden sein. Der Flansch des zweiten Achsgetriebemoduls kann direkt antreibend mit der Zwischenwelle verbunden sein.

In einer weiteren Ausführungsform ist das erste Achsgetriebemodul zur Verbindung mit einem, insbesondere zentralen und/oder in Fahrzeuglängsrichtung ausgerichteten, Elektroantrieb ausgebildet.

In einem weiteren Ausführungsbeispiel ist das zweite Achsgetriebemodul zur Verbindung mit einem, insbesondere zentralen und/oder in Fahrzeuglängsrichtung ausgerichteten, Verbrennungsmotor ausgebildet.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Prinzipskizze einer Ausführungsform eines Achsgetriebemoduls;
- Figur 2: eine Prinzipskizze einer weiteren Ausführungsform eines Achsgetriebemoduls;
- Figur 3: eine schematische Schnittdarstellung der Ausführungsform des Achsgetriebemoduls von Figur 2;
- Figur 4: eine Prinzipskizze einer weiteren anderen Ausführungsform eines Achsgetriebemoduls;
- Figur 5: eine Prinzipskizze einer weiteren anderen Ausführungsform eines Achsgetriebemoduls;
- Figur 6: eine Prinzipskizze einer weiteren anderen Ausführungsform eines Achsgetriebemoduls; und
- Figur 7: eine schematische Schnittdarstellung der Ausführungsform des Achsgetriebemoduls von Figur 6.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Insbesondere weisen in der vorliegenden Offenbarung identische Bezugszeichen auf gleiche Bauteile (gleich aufgebaut und gleich wirkend) hin. Selbstverständlich können auch nur gleich oder ähnlich wirkende Bauteile bei identischen Bezugszeichen verwendet werden. Bezugszeichen, die die gleichen zwei Endziffern aufweisen, sich jedoch in Hunderterschritten unterscheiden (z. B. 16, 116, 216), weisen auf ähnlich oder gleich wirkende Bauteile hin, die insbesondere unterschiedlich aufgebaut sind.

Die vorliegende Offenbarung beruht u.a. auf der Erkenntnis, dass ein Anpass- oder Reduziergetriebe direkt in ein Achsgetriebemodul integriert werden kann. Ein Achsgetriebe ist ein in einer angetriebenen Achse eingebautes Getriebe. Zur Realisierung des Anpassgetriebes kann dieses bspw. direkt an eine die Kegelradstufe antreibende Zwischenwelle angeflanscht werden. Damit können auch größere Übersetzungen, die allein durch eine Kegelradstufe des Anpassgetriebes nicht zu verwirklichen sind, erreicht werden.

Dies ermöglicht beim Einsatz eines oder mehrerer Elektromotoren zum Antreiben des Kraftfahrzeugs, dass die erforderliche höhere Übersetzung gegenüber Antrieben mit Verbrennungsmotor erreichbar ist. Eine derartige Lösung profitiert insbesondere davon, dass ein Baukastensystem zum Aufbau von Achsgetriebemodulen für den Antrieb durch einen Elektromotor und zum Aufbau von Achsgetriebemodulen für den Antrieb durch einen Verbrennungsmotor vorgesehen werden kann. Es wird vorgeschlagen, das Achsgetriebemodulsystem so vorzusehen, dass möglichst viele Gleichteile verwendet werden. Zusätzlich soll das Achsgetriebemodulsystem den Aufbau eines ersten Achsgetriebemoduls mit hinzugefügtem Anpassgetriebe und den Aufbau eines zweiten Achsgetriebemoduls ohne Anpassgetriebe ermöglichen. Das in einem Gehäuse aufgenommene Anpassgetriebe kann bspw. alternativ zu einer Abdeckung der Zwischenwelle vorgesehen werden, um alternativ das erste Achsgetriebemodul oder das zweite Ausgetriebemodul auszubilden. Ein solches Vorgehen hat den Vorteil, dass Produktionskosten insgesamt gesenkt und insbesondere preiswerte Achsgetriebemodule für Elektrofahrzeuge auch in kleiner Stückzahl herstellbar sind, da viele Gleichteile mit einem herkömmlichen, heutzutage noch sehr viel häufiger produzierten Achsgetriebe zur Verbindung mit einem Verbrennungsmotor bestehen.

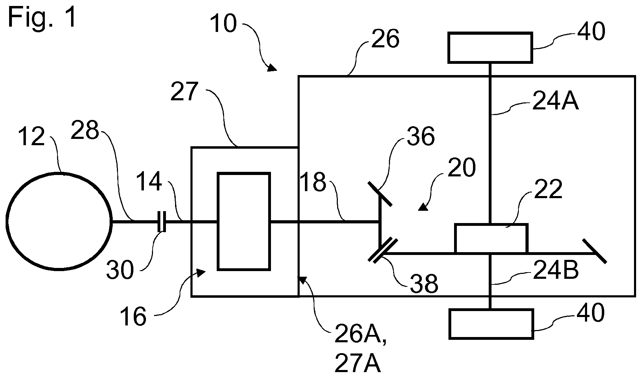

Die Figur 1 zeigt eine Prinzipskizze eines Achsgetriebemoduls 10. Das Achsgetriebemodul 10 kann beispielsweise als Hinterachsgetriebemodul bei einem Nutzfahrzeug, zum Beispiel einem Lastkraftwagen oder Omnibus, verwendet werden. Insbesondere ist das Achsgetriebemodul 10 zur Verwendung mit einem Elektroantrieb 12 vorgesehen, wie in der Figur 1 beispielhaft dargestellt ist.

In der dargestellten Ausführungsform weist das Achsgetriebemodul 10 eine Eingangswelle 14, ein Anpassgetriebe 16, eine Zwischenwelle 18, eine Kegelradstufe 20, ein Querdifferential (Achsdifferential) 22 (nicht im Detail dargestellt) und zwei Radwellen 24A, 24B auf. Zusätzlich weist das Achsgetriebemodul 10 ein Achsgetriebegehäuse 26 und ein Anpassgetriebegehäuse 27 auf.

Der Elektroantrieb 12 kann beispielsweise bei einem Lastkraftwagen als zentraler Elektromotor ausgebildet sein, der zum Beispiel in der Fahrzeugmitte angeordnet ist. Bei einem Omnibus kann der Elektroantrieb 12 im Fahrzeugfrontbereich, in der Fahrzeugmitte oder im Fahrzeugheckbereich angeordnet sein.

Der Elektroantrieb 12 ist über eine Antriebswelle 28 ohne Zwischenschaltung eines Anpassgetriebes mit dem Achsgetriebemodul 10 verbunden. Im Einzelnen ist die Antriebswelle 28 drehfest mit einem Flansch 30 verbunden, der wiederum drehfest auf der Eingangswelle 14 angeordnet ist.

Auf die Zwischenschaltung eines separaten Reduktionsgetriebes zwischen den Elektroantrieb 12 und das Achsgetriebemodul 10 kann verzichtet werden, da das in das Achsgetriebemodul 10 integrierte Anpassgetriebe 16 zusammen mit der Kegelradstufe 20 die erforderliche Übersetzung erbringt. In einigen Ausführungsformen können zwischen der Antriebswelle 28 und der Eingangswelle 14 weitere Antriebswellen vorgesehen sein, zum Beispiel eine Kardanwelle.

Das Anpassgetriebe 16 ist koaxial zu der Zwischenwelle 18 angeordnet. Die Eingangswelle 14 ist antreibend mit dem Anpassgetriebe 16 verbunden. Das Anpassgetriebe 16 ist antreibend mit der Zwischenwelle 18 verbunden. Das Anpassgetriebe 16 weist eine Übersetzung ungleich 1, insbesondere größer als 1, auf.

Das Anpassgetriebe 16 treibt über die Zwischenwelle 18 die Kegelradstufe 20 an. Die Kegelradstufe 20 weist ein Kegelritzel 36 und ein Tellerrad 38 auf. Das Kegelritzel 36 und das Tellerrad 38 kämmen miteinander. Die Kegelradstufe 20 lenkt die von der Zwischenwelle 18 bereitgestellte Kraft um ca. 90° über das Querdifferential 22 auf die Radwellen 24A, 24B um. Die Zwischenwelle 18 ist koaxial zu der Eingangswelle 14 angeordnet. Die Eingangswelle 14 und die Zwischenwelle 18 erstrecken sich in einer Fahrzeuglängsrichtung. In einigen Ausführungsformen können die Zwischenwelle 18 und das Kegelritzel 36 der Kegelradstufe 20 als integrale Einheit in Form einer Kegelritzelwelle ausgebildet sein. Die Kegelradstufe 20 kann bspw. geradverzahnte, schrägverzahnte oder bogenverzahnte (Spiral- oder Hypoid-) Kegelräder aufweisen.

Die Radwellen 24A, 24B treiben die Räder 40 an. Über das Querdifferential 22 kann auf bekannte Weise ein Ausgleich der Drehzahlen zwischen den beiden Rädern 40 erreicht werden. Im Einzelnen wird dann ein Rad 40 von einer ersten Radwelle 24A angetrieben und das andere Rad 40 wird von der zweiten Radwelle 24B angetrieben.

Das Achsgetriebegehäuse 26 nimmt die Zwischenwelle 18 (teilweise), die Kegelradstufe 20, das Querdifferential 22 und die Radwellen 24A, 24B auf. Das Anpassgetriebegehäuse 27 nimmt die Eingangswelle 10 (teilweise), das Anpassgetriebe 16 und die Zwischenwelle 18 (teilweise) auf. Zusammen bilden das Achsgetriebegehäuse 26 und das Anpassgetriebegehäuse 27 ein Achsgetriebemodulgehäuse. Im Einzelnen weist das Anpassgetriebegehäuse 27 einen Montagebereich 27A auf, der an einen Montagebereich 26A des Achsgetriebegehäuses 26 montiert ist.

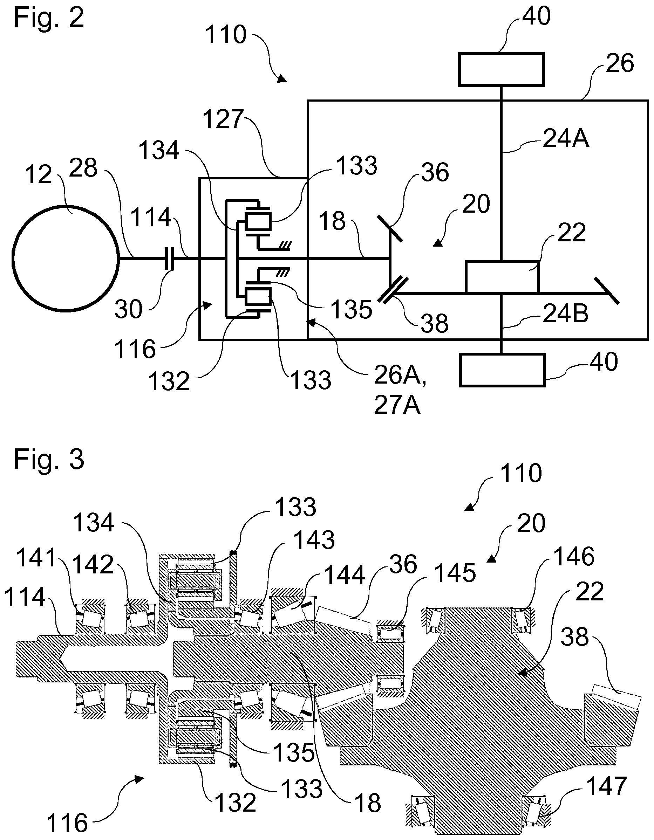

Die Figur 2 zeigt eine Prinzipskizze eines Achsgetriebemoduls 110. Die Figur 3 zeigt eine schematische Schnittansicht des Achsgetriebemoduls 110. Im Unterschied zum Achsgetriebemodul 10 von Figur 1 ist beim Achsgetriebemodul 110 die Konfiguration des Anpassgetriebes als Planetengetriebe 116 näher spezifiziert.

Das Planetengetriebe 116 weist ein Hohlrad 132, Planetenräder 133, einen Planetenträger (Steg) 134 und ein Sonnenrad 135 auf. Das Hohlrad 132 ist drehfest mit der Eingangswelle 114 verbunden. Der Planetenträger 134 ist drehfest mit der Zwischenwelle 118 verbunden. Das Sonnenrad 135 ist drehfest mit dem Anpassgetriebegehäuse 127 verbunden. Eine Drehung der Eingangswelle 114 bewirkt eine Drehung des Hohlrads 132. Die Drehung des Hohlrads 132 bewirkt eine Drehung der Planetenräder 133, die um das feststehende Sonnenrad 135 rotieren und dabei den Planetenträger 134 drehen. Der Planetenträger 134 wiederum dreht die Zwischenwelle 118.

Das Planetengetriebe 116 weist eine Übersetzung größer als 1 auf. Insbesondere kann das Planetengetriebe 116 eine Übersetzung bis 13 (bei einem einstufigen Planetengetriebe) und bis 35 (bei einem mehrstufigen Planetengetriebe (Stufenplanetengetriebe)) bereitstellen. Damit stellt das Planetengetriebe 116 das Anpassgetriebe dar, um zusammen mit der Übersetzung durch die Kegelradstufe 20 die insgesamt erforderliche Übersetzung zwischen der Antriebswelle 28 (dem Elektromotor 12) und den Radwellen 24A, 24B bereitzustellen. Insbesondere weisen das Planetengetriebe 116 und die Kegelradstufe 20 gemeinsam eine Übersetzung größer als 5,0 auf, die aufgrund von physikalischen Beschränkungen nicht von der Kegelradstufe 20 alleine geleistet werden könnte.

Das Planetengetriebe 116 und die Kegelradstufe 20 können zusammen eine Übersetzung bis ungefähr 70 (bei einem einstufigen Planetengetriebe) und bis ungefähr 190 (bei einem mehrstufigen Planetengetriebe (Stufenplanetengetriebe)) erbringen. Bei der Verwendung mit dem Elektromotor 12 kann eine gemeinsame Übersetzung insbesondere in einem Bereich zwischen 6 und 15, vorzugsweise zwischen 7 und 8, liegen, wobei eine Übersetzung des Planetengetriebes 16 insbesondere zwischen 1 und 2 liegen kann.

In der Figur 3 ist gezeigt, dass die Eingangswelle 114 im Anpassgetriebegehäuse 127 (siehe Figur 2) über Lager 141, 142 drehbar gelagert ist. Die Zwischenwelle 18 ist im Anpassgetriebegehäuse 127 über Lager 143, 144 und im Achsgetriebegehäuse 26 über ein Lager 145 drehbar gelagert. Das Querdifferential 22 ist im Achsgetriebegehäuse 26 über Lager 146, 147 drehbar gelagert. Das Achsgetriebegehäuse 26 weist weitere Elemente, wie beispielsweise Dichtungen usw., auf. Das Achsgetriebegehäuse 26 und das Anpassgetriebegehäuse 127 können mit einer nicht dargestellten Achsbrücke ineinander verbaut sein.

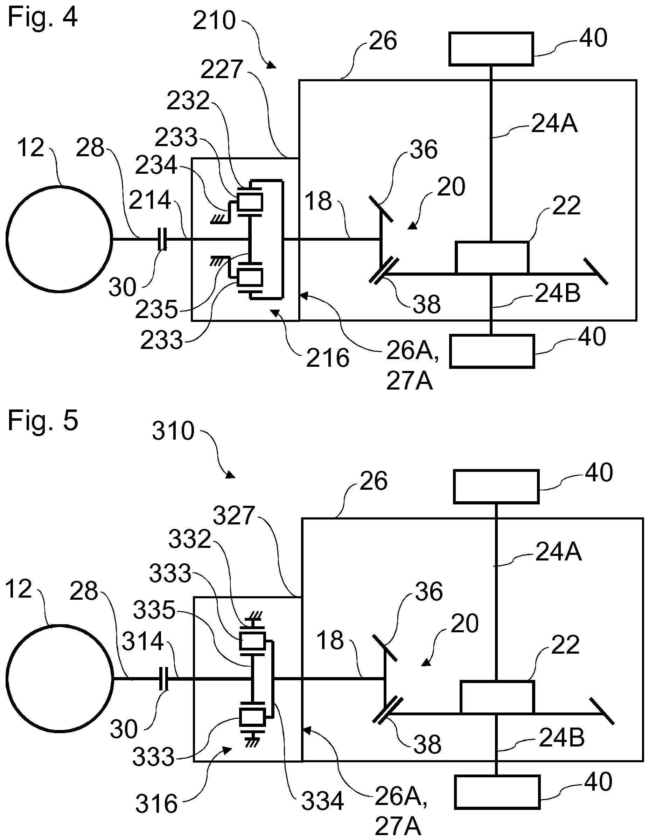

Die Figur 4 zeigt eine Prinzipskizze eines Achsgetriebemoduls 210, bei der eine andere Konfiguration eines Planetengetriebes als in den Figuren 2 und 3 verwendet wird.

Das Planetengetriebe 216 weist ein Hohlrad 232, Planetenräder 233, einen Planetenträger (Steg) 234 und ein Sonnenrad 235 auf. Das Sonnenrad 235 ist drehfest mit der Eingangswelle 214 verbunden. Der Hohlrad 232 ist drehfest mit der Zwischenwelle 18 verbunden. Der Planetenträger 234 ist drehfest mit dem Anpassgetriebegehäuse 227 verbunden. Eine Drehung der Eingangswelle 14 bewirkt eine Drehung des Sonnenrads 235. Die Drehung des Sonnenrads 235 bewirkt eine Drehung der Planetenräder 233, die auf dem feststehenden Planetenträger 235 rotieren. Die sich um die jeweils eigene Achse drehenden Planetenräder 233 drehen das Hohlrad 232. Das Hohlrad 232 wiederum dreht die Zwischenwelle 18.

In der Figur 5 ist eine Prinzipskizze eines Achsgetriebemoduls 310 gezeigt, bei der wiederum eine andere Konfiguration eines Planetengetriebes verwendet wird.

Das Planetengetriebe 316 weist ein Hohlrad 332, Planetenräder 333, einen Planetenträger (Steg) 334 und ein Sonnenrad 335 auf. Das Sonnenrad 335 ist drehfest mit der Eingangswelle 314 verbunden. Die Eingangswelle 314 und das Sonnenrad 335 können wie die Eingangswelle 214 und das Sonnenrad 235 (siehe Figur 4) ausgebildet sein. Der Planetenträger 334 ist drehfest mit der Zwischenwelle 18 verbunden. Das Hohlrad 332 ist drehfest mit dem Anpassgetriebegehäuse 327 verbunden. Eine Drehung der Eingangswelle 314 bewirkt eine Drehung des Sonnenrades 335 und damit auch der Planetenräder 333. Die sich drehenden Planetenrädern 333 rotieren innerhalb des feststehenden Hohlrads 332 um eine gemeinsame Mittelachse und drehen dabei den Planetenträger 334. Der Planetenträger 334 wiederum dreht die Zwischenwelle 18.

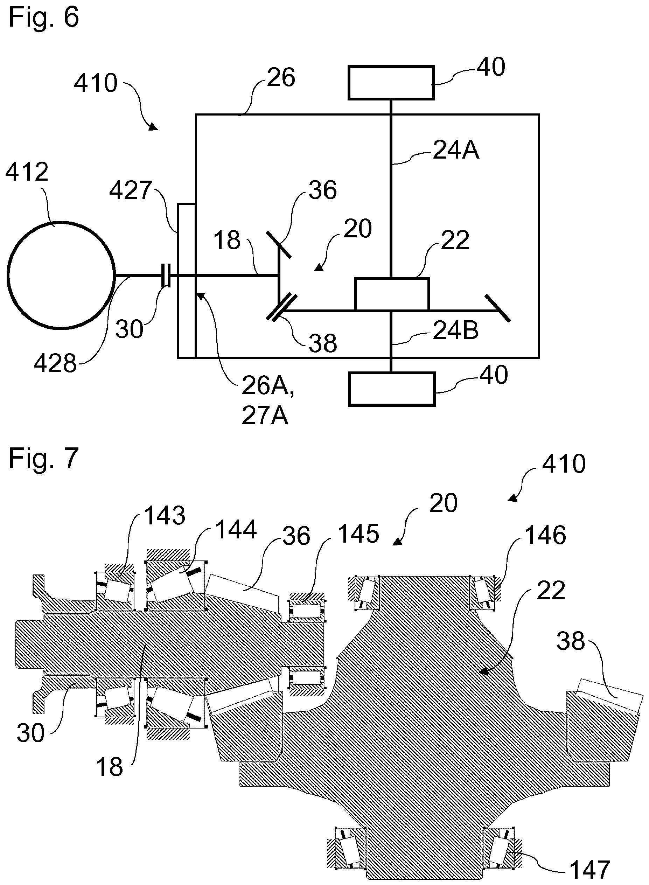

Die Figur 6 zeigt eine Prinzipskizze eines Achsgetriebemoduls 410 und die Figur 7 zeigt eine schematische Schnittansicht des Achsgetriebemoduls 410. Im Unterschied zu den Achsgetriebemodulen 10, 110, 210 und 310 ist das Achsgetriebemodul 410 ohne Anpassgetriebe vorgesehen. Das Achsgetriebemodul 410 ist insbesondere für einen Antrieb durch einen zentralen und/oder in Fahrzeuglängsrichtung ausgerichteten Verbrennungsmotor 412 geeignet.

Statt eines Anpassgetriebes weist das Achsgetriebemodul 410 lediglich eine Abdeckung 427 auf, die an das Achsgetriebegehäuse 26 montiert ist. Im Einzelnen ist die Abdeckung 427 mit einem Montagebereich 27A an den Montagebereich 26A des Achsgetriebegehäuses 26 montiert. Die Abdeckung 427 ist als Ritzeltopf zur Aufnahme und Zentrierung eines Bereichs der Zwischenwelle 18 ausgebildet.

Hervorzuheben ist insbesondere, dass die Achsgetriebemodule 10, 110, 210, 310, 410 viele Gleichteile aufweisen, sodass die Achsgetriebemodule in einem Modulbaukastensystem aufgebaut werden können. Die in den Figuren verwendeten identischen Bezugszeichen weisen auf Teile hin, die insbesondere als Gleichteile infrage kommen. Gleichteile können insbesondere die Kegelradstufe 20, die Zwischenwelle 18, das Querdifferential 22, die Radwellen 24A, 24B, das Achsgetriebegehäuse 26, die Lager 143-147, der Flansch 30 und Dichtungen im Achsgetriebegehäuse 26 sein.

Zum Beispiel kann bei jedem Achsgetriebemodul 10, 110, 210, 310, 410 das gleiche Achsgetriebegehäuse 26 verwendet werden. Zum Aufbau eines Achsgetriebemoduls mit Anpassgetriebe kann dann einfach das Anpassgetriebegehäuse 27, 127, 227, 327, in dem das Anpassgetriebe (Planetengetriebe) 16, 116, 216, 316 aufgenommen ist, an das Achsgetriebegehäuse 26 montiert werden. Andererseits kann zum Aufbau eines Achsgetriebemoduls ohne Anpassgetriebe einfach die Abdeckung 427 an das Achsgetriebegehäuse 26 montiert werden. Dies wird dadurch ermöglicht, dass die Anpassgetriebegehäuse 27, 127, 227, 327 und die Abdeckung 427 gleich ausgebildete Montagebereiche 27A aufweisen (zum Bsp. mit gleicher Montagepassung, gleichem Zentrierdurchmesser, gleichem Lochkreisdurchmesser und/oder gleichem Schraubenbohrungsdurchmesser), die mit dem Montagebereich 26A des Achsgetriebegehäuses 26 zusammenpassen. In anderen Ausführungsformen kann das Achsgetriebegehäuse 26 nicht als Gleichteil verwendet werden. Stattdessen können beispielsweise modulspezifische Achsgetriebemodulgehäuse für die Achsgetriebemodule 10, 110, 210, 310 und 410 verwendet werden.

Als weiteres Beispiel kann beispielsweise eine als integrierte Kegelritzelwelle ausgebildete Kombination der Zwischenwelle 18 und des Kegelritzels 36 bei allen Achsgetriebemodulen 10, 110, 210, 310 und 410 verwendet werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich, definiert durch die Ansprüche, fallen.

### Bezugszeichenliste

- 10: Achsgetriebemodul
- 12: Elektromotor (Antriebseinheit)
- 14: Eingangswelle
- 16: Anpassgetriebe
- 18: Zwischenwelle
- 20: Kegelradstufe
- 22: Querdifferential (Achsdifferential)
- 24A: Erste Radwelle
- 24B: Zweite Radwelle
- 26: Achsgetriebegehäuse
- 26A: Montagebereich
- 27: Anpassgetriebegehäuse
- 27A: Montagebereich
- 28: Antriebswelle
- 30: Flansch
- 36: Kegelritzel
- 38: Tellerrad
- 40: Rad
- 110: Achsgetriebemodul
- 114: Eingangswelle
- 116: Planetengetriebe (Anpassgetriebe)
- 127: Anpassgetriebegehäuse
- 132: Hohlrad
- 133: Planetenrad
- 134: Planetenträger (Steg)
- 135: Sonnenrad
- 210: Achsgetriebemodul
- 214: Eingangswelle
- 216: Planetengetriebe (Anpassgetriebe)
- 227: Anpassgetriebegehäuse
- 232: Hohlrad
- 233: Planetenrad
- 234: Planetenträger (Steg)
- 235: Sonnenrad
- 310: Achsgetriebemodul
- 314: Eingangswelle
- 316: Planetengetriebe (Anpassgetriebe)
- 327: Anpassgetriebegehäuse
- 332: Hohlrad
- 333: Planetenrad
- 334: Planetenträger (Steg)
- 335: Sonnenrad
- 410: Achsgetriebemodul
- 412: Verbrennungsmotor (Antriebseinheit)
- 427: Abdeckung
- 428: Antriebswelle

## Patentansprüche

1. Verwendung eines Achsgetriebemodulsystems für ein Kraftfahrzeug, insbesondere Nutzfahrzeug, wobei die Verwendung aufweist:
Anpassen eines Achsgetriebemoduls (10; 110; 210; 310), insbesondere eines Hinterachsgetriebemoduls, wahlweise als ein erstes Achsgetriebemodul (10; 110; 210; 310) und ein zweites Achsgetriebemodul (410),
wobei das erste Achsgetriebemodul und das zweite Achsgetriebemodul aufweisen:
- eine erste Radwelle (24A) und eine zweite Radwelle (24B), die antreibend mit Rädern (40) des Kraftfahrzeugs verbindbar sind;
- ein Querdifferential (22), das antreibend mit der ersten Radwelle (24A) und der zweiten Radwelle (24B) verbunden ist;
- eine Kegelradstufe (20), die antreibend mit dem Querdifferential (22) verbunden ist;
- eine Zwischenwelle (18), die antreibend mit der Kegelradstufe (20) verbunden ist; und
wobei die Zwischenwelle (18), die Kegelradstufe (20), die erste Radwelle (24A), die zweite Radwelle (24B) und/oder das Querdifferential (22) des ersten Achsgetriebemoduls (10; 110; 210; 310) und des zweiten Achsgetriebemoduls (410) gleich ausgebildet sind; und
wobei nur das erste Achsgetriebemodul (10; 110; 210; 310) ferner ein Anpassgetriebe (16), insbesondere Planetengetriebe (116; 216; 316), mit einer Übersetzung ungleich 1, vorzugsweise größer als 1, das antreibend mit der Zwischenwelle (18) verbunden und koaxial zu der Zwischenwelle (18) vorgesehen ist, wobei die Zwischenwelle (18) zum Antreiben der Räder (40) nur über das Anpassgetriebe (16) antreibbar ist, aufweist.

2. Verwendung nach Anspruch 1, wobei:
ein Sonnenrad (135) des Planetengetriebes (116) gehäusefest festgelegt ist; und/oder
eine Eingangswelle (114) des Achsgetriebemoduls (110) direkt antreibend mit einem Hohlrad (132) des Planetengetriebes (116) verbunden ist; und/oder
ein Planetenträger (134) des Planetengetriebes (116) direkt antreibend mit der Zwischenwelle (18) verbunden ist.

3. Verwendung nach Anspruch 1, wobei:
ein Planetenträger (234) des Planetengetriebes (116) gehäusefest festgelegt ist; und/oder
eine Eingangswelle (214) des Achsgetriebemoduls (210) direkt antreibend mit einem Sonnenrad (235) des Planetengetriebes (216) verbunden ist; und/oder
ein Hohlrad (232) des Planetengetriebes (234) direkt antreibend mit der Zwischenwelle (18) verbunden ist.

4. Verwendung nach Anspruch 1, wobei:
ein Hohlrad (332) des Planetengetriebes (316) gehäusefest festgelegt ist; und/oder
eine Eingangswelle (314) des Achsgetriebemoduls (310) direkt antreibend mit einem Sonnenrad (335) des Planetengetriebes (316) verbunden ist; und/oder
ein Planetenträger (334) des Planetengetriebes (316) direkt antreibend mit der Zwischenwelle (18) verbunden ist.

5. Verwendung nach einem der vorherigen Ansprüche, ferner aufweisend:
ein Achsgetriebegehäuse (26), in dem die erste Radwelle (24A), die zweite Radwelle (24B), das Querdifferential (22), die Kegelradstufe (20) und teilweise die Zwischenwelle (18) aufgenommen sind; und
ein Anpassgetriebegehäuse (27), in dem das Anpassgetriebe (16; 116; 216; 316) und teilweise die Zwischenwelle (18) aufgenommen ist und das an das Achsgetriebegehäuse (26) montiert ist.

6. Verwendung nach einem der vorherigen Ansprüche, wobei:
die erste Radwelle (24A), die zweite Radwelle (24B), das Querdifferential (22), die Kegelradstufe (20), die Zwischenwelle (18) und das Anpassgetriebe (16; 116; 216; 316) in einer Achsbrücke integriert und/oder verbaut sind; und/oder
das Achsgetriebegehäuse (26) und das Anpassgetriebegehäuse (27) in einer Achsbrücke integriert und/oder verbaut sind.

7. Verwendung nach einem der vorherigen Ansprüche, wobei:
das Anpassgetriebe (16; 116; 216; 316) und die Kegelradstufe (20) eine gemeinsame Übersetzung in einem Bereich zwischen 6 und 25, insbesondere zwischen 6 und 15, vorzugsweise zwischen 7 und 9, aufweisen.

8. Verwendung nach einem der vorherigen Ansprüche, wobei:
das Anpassgetriebe (16; 116; 216; 316) direkt antreibend mit der Zwischenwelle (18) verbunden ist; und/oder
die Zwischenwelle (18) direkt antreibend mit der Kegelradstufe (20) verbunden ist; und/oder
die Kegelradstufe (20) direkt antreibend mit dem Querdifferential (22) verbunden ist; und/oder
das Querdifferential (22) direkt antreibend mit der ersten Radwelle (24A) und der zweiten Radwelle (24B) verbunden ist.

9. Verwendung nach einem der vorherigen Ansprüche, wobei die Zwischenwelle (18) integral mit einem Kegelritzel (36) der Kegelradstufe (20) ausgebildet ist.

10. Verwendung nach Anspruch 5 oder nach einem der Ansprüche 6 bis 9, wenn abhängig vom Anspruch 5, wobei:
das Achsgetriebegehäuse (26) des ersten Achsgetriebemoduls (10; 110; 210; 310) und des zweiten Achsgetriebemoduls (410) gleich ausgebildet ist; und/oder
nur das erste Achsgetriebemodul (10; 110; 210; 310) das Anpassgetriebegehäuse (27) aufweist; und/oder
nur das zweite Achsgetriebemodul (410) eine Abdeckung (427), insbesondere einen Ritzeltopf, zum Umgeben eines aus dem Achsgetriebegehäuse (26) vorstehenden Bereichs der Zwischenwelle (18) aufweist.

11. Verwendung nach Anspruch 5 oder nach einem der Ansprüche 6 bis 10, wenn abhängig vom Anspruch 5, wobei:
das Achsgetriebegehäuse (26) einen Montagebereich (26A) aufweist, an dem wahlweise das Anpassgetriebegehäuse (27) des ersten Achsgetriebemoduls (10; 110; 210; 310) oder die Abdeckung (427) des zweiten Achsgetriebemoduls (410) montierbar ist, und/oder
ein Montagebereich (27A) des Anpassgetriebegehäuses (27) und ein Montagebereich (27A) der Abdeckung (427) gleich ausgebildet sind.

12. Verwendung nach einem der Ansprüche 10 oder 11, wobei:
mindestens ein Lager (143-147) der ersten Radwelle (24A), der zweiten Radwelle (24B), des Querdifferentials (22) und/oder der Zwischenwelle (18) des ersten Achsgetriebemoduls (10; 110; 210; 310) und des zweiten Achsgetriebemoduls (410) gleich ausgebildet ist; und/oder
mindestens eine Dichtung, insbesondere des Achsgetriebegehäuses (26), des ersten Achsgetriebemoduls (10; 110; 210; 310) und des zweiten Achsgetriebemoduls (410) gleich ausgebildet ist; und/oder
ein Flansch (30) des ersten Achsgetriebemoduls (10; 110; 210; 310) und des zweiten Achsgetriebemoduls (410) zum Antreiben des Achsgetriebemoduls gleich ausgebildet ist.

13. Verwendung nach einem der Ansprüche 10 bis 12, ferner aufweisend:
Verbinden des ersten Achsgetriebemoduls (10; 110; 210; 310) mit einem, insbesondere zentralen und/oder in Fahrzeuglängsrichtung ausgerichteten, Elektroantrieb (12); und/oder
Verbinden des zweiten Achsgetriebemoduls (410) mit einem, insbesondere zentralen und/oder in Fahrzeuglängsrichtung ausgerichteten, Verbrennungsmotor (412).

## Claims

1. The use of an axle transmission module system for a motor vehicle, in particular utility vehicle, wherein the use comprises:
adapting an axle transmission module (10; 110; 210; 310), in particular a rear-axle transmission module, selectively as a first axle transmission module (10; 110; 210; 310) and a second axle transmission module (410),
wherein the first axle transmission module and the second axle transmission module have:
- a first wheel shaft (24A) and a second wheel shaft (24B) which are connectable with driving action to wheels (40) of the motor vehicle;
- a transverse differential (22) which is connected with driving action to the first wheel shaft (24A) and to the second wheel shaft (24B);
- a bevel-gear stage (20) which is connected with driving action to the transverse differential (22);
- an intermediate shaft (18) which is connected with driving action to the bevel-gear stage (20); and wherein the intermediate shaft (18), the bevel-gear stage (20), the first wheel shaft (24A), the second wheel shaft (24B) and/or the transverse differential (22) of the first axle transmission module (10; 110; 210; 310) and of the second axle transmission module (410) are of identical form; and
wherein only the first axle transmission module (10; 110; 210; 310) furthermore has an adaptation transmission (16), in particular planetary transmission (116; 216; 316), which has a speed ratio not equal to 1, preferably higher than 1, and which is connected with driving action to the intermediate shaft (18) and is provided coaxially with respect to the intermediate shaft (18), wherein the intermediate shaft (18) can, in order to drive the wheels (40), be driven only via the adaptation transmission (16) .

2. The use according to Claim 1, wherein:
a sun gear (135) of the planetary transmission (116) is fixed with respect to a housing; and/or
an input shaft (114) of the axle transmission module (110) is connected directly with driving action to an internal gear (132) of the planetary transmission (116); and/or
a planet carrier (134) of the planetary transmission (116) is connected directly with driving action to the intermediate shaft (18).

3. The use according to Claim 1, wherein:
a planet carrier (234) of the planetary transmission (116) is fixed with respect to a housing; and/or
an input shaft (214) of the axle transmission module (210) is connected directly with driving action to a sun gear (235) of the planetary transmission (216); and/or
an internal gear (232) of the planetary transmission (234) is connected directly with driving action to the intermediate shaft (18).

4. The use according to Claim 1, wherein:
an internal gear (332) of the planetary transmission (316) is fixed with respect to a housing; and/or
an input shaft (314) of the axle transmission module (310) is connected directly with driving action to a sun gear (335) of the planetary transmission (316); and/or
a planet carrier (334) of the planetary transmission (316) is connected directly with driving action to the intermediate shaft (18).

5. The use according to one of the preceding claims, furthermore having:
an axle transmission housing (26) in which the first wheel shaft (24A), the second wheel shaft (24B), the transverse differential (22), the bevel-gear stage (20) and, in part, the intermediate shaft (18) are accommodated; and
an adaptation transmission housing (27) in which the adaptation transmission (16; 116; 216; 316) and, in part, the intermediate shaft (18) are accommodated and which is mounted on the axle transmission housing (26).

6. The use according to one of the preceding claims, wherein:
the first wheel shaft (24A), the second wheel shaft (24B), the transverse differential (22), the bevel-gear stage (20), the intermediate shaft (18) and the adaptation transmission (16; 116; 216; 316) are integrated and/or installed in an axle bracket; and/or
the axle transmission housing (26) and the adaptation transmission housing (27) are integrated and/or installed in an axle bracket.

7. The use according to one of the preceding claims, wherein:
the adaptation transmission (16; 116; 216; 316) and the bevel-gear stage (20) have a common speed ratio in a range between 6 and 25, in particular between 6 and 15, preferably between 7 and 9.

8. The use according to one of the preceding claims, wherein:
the adaptation transmission (16; 116; 216; 316) is connected directly with driving action to the intermediate shaft (18); and/or
the intermediate shaft (18) is connected directly with driving action to the bevel-gear stage (20); and/or
the bevel-gear stage (20) is connected directly with driving action to the transverse differential (22); and/or
the transverse differential (22) is connected directly with driving action to the first wheel shaft (24A) and to the second wheel shaft (24B).

9. The use according to one of the preceding claims, wherein the intermediate shaft (18) is formed integrally with a bevel pinion (36) of the bevel-gear stage (20).

10. The use according to Claim 5 or according to one of Claims 6 to 9 if dependent on Claim 5, wherein:
the axle transmission housing (26) of the first axle transmission module (10; 110; 210; 310) and of the second axle transmission module (410) is of identical form; and/or
only the first axle transmission module (10; 110; 210; 310) has the adaptation transmission housing (27); and/or
only the second axle transmission module (410) has a cover (427), in particular a pinion pot, for surrounding a region of the intermediate shaft (18) that projects out of the axle transmission housing (26).

11. The use according to Claim 5 or according to one of Claims 6 to 10 if dependent on Claim 5, wherein:
the axle transmission housing (26) has a mounting region (26A) on which selectively the adaptation transmission housing (27) of the first axle transmission module (10; 110; 210; 310) or the cover (427) of the second axle transmission module (410) can be mounted, and/or
a mounting region (27A) of the adaptation transmission housing (27) and a mounting region (27A) of the cover (427) are of identical form.

12. The use according to either of Claims 10 and 11, wherein:
at least one bearing (143-147) of the first wheel shaft (24A), of the second wheel shaft (24B), of the transverse differential (22) and/or of the intermediate shaft (18) of the first axle transmission module (10; 110; 210; 310) and of the second axle transmission module (410) is of identical form; and/or
at least one seal, in particular of the axle transmission housing (26), of the first axle transmission module (10; 110; 210; 310) and of the second axle transmission module (410) is of identical form; and/or
a flange (30) of the first axle transmission module (10; 110; 210; 310) and of the second axle transmission module (410) for driving the axle transmission module is of identical form.

13. The use according to one of Claims 10 to 12, furthermore comprising:
connecting the first axle transmission module (10; 110; 210; 310) to an electric drive (12), which is in particular central and/or oriented in a vehicle longitudinal direction; and/or
connecting the second axle transmission module (410) to an internal combustion engine (412), which is in particular central and/or oriented in a vehicle longitudinal direction.

## Revendications

1. Utilisation d'un système de module de transmission d'essieu pour un véhicule automobile, en particulier un véhicule utilitaire, l'utilisation comprenant :
l'adaptation d'un module de transmission d'essieu (10 ; 110 ; 210 ; 310), en particulier d'un module de transmission d'essieu arrière, sélectivement en tant que premier module de transmission d'essieu (10 ; 110 ; 210 ; 310) et deuxième module de transmission d'essieu (410), le premier module de transmission d'essieu et le deuxième module de transmission d'essieu comprenant :
- un premier arbre de roue (24A) et un deuxième arbre de roue (24B) qui peuvent être connectés par entraînement à des roues (40) du véhicule automobile ;
- un différentiel transversal (22) qui est connecté par entraînement au premier arbre de roue (24A) et au deuxième arbre de roue (24B) ;
- un étage à roues coniques (20) qui est connecté par entraînement au différentiel transversal (22) ;
- un arbre intermédiaire (18) qui est connecté par entraînement à l'étage à roues coniques (20) ; et l'arbre intermédiaire (18), l'étage à roues coniques (20), le premier arbre de roue (24A), le deuxième arbre de roue (24B) et/ou le différentiel transversal (22) du premier module de transmission d'essieu (10 ; 110 ; 210 ; 310) et du deuxième module de transmission d'essieu (410) étant réalisés de manière identique ; et
seulement le premier module de transmission d'essieu (10 ; 110 ; 210 ; 310) comprenant en outre une transmission d'adaptation (16), en particulier une transmission planétaire (116 ; 216 ; 316), présentant un rapport de transmission différent de 1, de préférence supérieur à 1, qui est connectée par entraînement à l'arbre intermédiaire (18) et est prévue de manière coaxiale à l'arbre intermédiaire (18), l'arbre intermédiaire (18) ne pouvant être entraîné que par le biais de la transmission d'adaptation (16) pour l'entraînement des roues (40).

2. Utilisation selon la revendication 1, dans laquelle :
un pignon planétaire (135) de la transmission planétaire (116) est fixé de manière solidaire du boîtier ; et/ou un arbre d'entrée (114) du module de transmission d'essieu (110) est connecté directement par entraînement à une couronne (132) de la transmission planétaire (116) ; et/ou
un porte-satellites (134) de la transmission planétaire (116) est connecté directement par entraînement à l'arbre intermédiaire (18).

3. Utilisation selon la revendication 1, dans laquelle :
un porte-satellites (234) de la transmission planétaire (116) est fixé de manière solidaire du boîtier ; et/ou un arbre d'entrée (214) du module de transmission d'essieu (210) est connecté directement par entraînement à un pignon planétaire (235) de la transmission planétaire (216) ; et/ou
une couronne (232) de la transmission planétaire (234) est connectée directement par entraînement à l'arbre intermédiaire (18).

4. Utilisation selon la revendication 1, dans laquelle :
une couronne (332) de la transmission planétaire (316) est fixée de manière solidaire du boîtier ; et/ou un arbre d'entrée (314) du module de transmission d'essieu (310) est connecté directement par entraînement à un pignon planétaire (335) de la transmission planétaire (316) ; et/ou
un porte-satellites (334) de la transmission planétaire (316) est connecté directement par entraînement à l'arbre intermédiaire (18).

5. Utilisation selon l'une des revendications précédentes, comprenant en outre :
un carter de transmission d'essieu (26) dans lequel le premier arbre de roue (24A), le deuxième arbre de roue (24B), le différentiel transversal (22), l'étage à roues coniques (20) et partiellement l'arbre intermédiaire (18) sont logés ; et
un carter de transmission d'adaptation (27) dans lequel la transmission d'adaptation (16 ; 116 ; 216 ; 316) et partiellement l'arbre intermédiaire (18) sont logés et lequel est monté sur le carter de transmission d'essieu (26) .

6. Utilisation selon l'une des revendications précédentes, dans laquelle :
le premier arbre de roue (24A), le deuxième arbre de roue (24B), le différentiel transversal (22), l'étage à roues coniques (20), l'arbre intermédiaire (18) et la transmission d'adaptation (16 ; 116 ; 216 ; 316) sont intégrés et/ou installés dans un pont d'essieu ; et/ou le carter de transmission d'essieu (26) et le carter de transmission d'adaptation (27) sont intégrés et/ou installés dans un pont d'essieu.

7. Utilisation selon l'une des revendications précédentes, dans laquelle :
la transmission d'adaptation (16 ; 116 ; 216 ; 316) et l'étage à roues coniques (20) présentent un rapport de transmission commun dans une plage comprise entre 6 et 25, en particulier entre 6 et 15, de préférence entre 7 et 9.

8. Utilisation selon l'une des revendications précédentes, dans laquelle :
la transmission d'adaptation (16 ; 116 ; 216 ; 316) est connectée directement par entraînement à l'arbre intermédiaire (18) ; et/ou
l'arbre intermédiaire (18) est connecté directement par entraînement à l'étage à roues coniques (20) ; et/ou l'étage à roues coniques (20) est connecté directement par entraînement au différentiel transversal (22) ; et/ou le différentiel transversal (22) est connecté directement par entraînement au premier arbre de roue (24A) et au deuxième arbre de roue (24B).

9. Utilisation selon l'une des revendications précédentes, dans laquelle l'arbre intermédiaire (18) est réalisé d'un seul tenant avec un pignon conique (36) de l'étage à roues coniques (20).

10. Utilisation selon la revendication 5 ou selon l'une des revendications 6 à 9, lorsqu'elle dépend de la revendication 5, dans laquelle :
le carter de transmission d'essieu (26) du premier module de transmission d'essieu (10 ; 110 ; 210 ; 310) et du deuxième module de transmission d'essieu (410) sont réalisés de manière identique ; et/ou
seulement le premier module de transmission d'essieu (10 ; 110 ; 210 ; 310) comprend le carter de transmission d'adaptation (27) ; et/ou
seulement le deuxième module de transmission d'essieu (410) comprend un couvercle (427), en particulier un pot de pignon, servant à entourer une région de l'arbre intermédiaire (18) qui fait saillie hors du carter de transmission d'essieu (26).

11. Utilisation selon la revendication 5 ou selon l'une des revendications 6 à 10, lorsqu'elle dépend de la revendication 5, dans laquelle :
le carter de transmission d'essieu (26) comprend une région de montage (26A) sur laquelle sélectivement le carter de transmission d'adaptation (27) du premier module de transmission d'essieu (10 ; 110 ; 210 ; 310) ou le couvercle (427) du deuxième module de transmission d'essieu (410) peut être monté, et/ou
une région de montage (27A) du carter de transmission d'adaptation (27) et une région de montage (27A) du couvercle (427) sont réalisées de manière identique.

12. Utilisation selon l'une des revendications 10 ou 11, dans laquelle :
au moins un palier (143-147) du premier arbre de roue (24A), du deuxième arbre de roue (24B), du différentiel transversal (22) et/ou de l'arbre intermédiaire (18) du premier module de transmission d'essieu (10 ; 110 ; 210 ; 310) et du deuxième module de transmission d'essieu (410) est réalisé de manière identique ; et/ou au moins un joint d'étanchéité, en particulier du carter de transmission d'essieu (26), du premier module de transmission d'essieu (10 ; 110 ; 210 ; 310) et du deuxième module de transmission d'essieu (410), est réalisé de manière identique ; et/ou
une bride (30) du premier module de transmission d'essieu (10 ; 110 ; 210 ; 310) et du deuxième module de transmission d'essieu (410) pour l'entraînement module de transmission d'essieu est réalisée de manière identique.

13. Utilisation selon l'une des revendications 10 à 12, comprenant en outre :
la liaison du premier module de transmission d'essieu (10 ; 110 ; 210 ; 310) à un entraînement électrique (12) en particulier central et/ou orienté dans la direction longitudinale du véhicule ; et/ou
la liaison du deuxième module de transmission d'essieu (410) à un moteur à combustion interne (412) en particulier central et/ou orienté dans la direction longitudinale du véhicule.
